# EUROPÄISCHE PATENTSCHRIFT

(11) **EP 1 652 820 B1**
(45) Veröffentlichungstag und Bekanntmachung des Hinweises auf die Patenterteilung: **15.08.2007**
(21) Anmeldenummer: 05021258.8
(22) Anmeldetag: 29.09.2005
(51) Int. Cl.: C02F 1/28, B01J 20/28

(54) **Filtermaterial**
Filter material
Materiél de filtrage

(30) Priorität: 05.10.2004 DE 102004049020
(43) Veröffentlichungstag der Anmeldung: 03.05.2006
(73) Patentinhaber: Rheinkalk Akdolit GmbH & Co.KG, 54570 Pelm (DE)
(72) Erfinder: Möller, Gerd, 54568 Gerolstein (DE); Möller, Rainer, 87435 Kempten (DE)
(74) Vertreter: Cohausz & Florack

(56) Entgegenhaltungen:
- DE-B- 1 232 055
- PATENT ABSTRACTS OF JAPAN Bd. 014, Nr. 161 (E-0909), 28. März 1990 (1990-03-28) & JP 02 018871 A (TOKYO ELECTRIC POWER CO INC:THE; others: 01), 23. Januar 1990 (1990-01-23)
- CHAKRAVARTY, S. ET AL.: "Removal of arsenic from groundwater using low cost ferruginous manganese ore" WATER RESEARCH, Bd. 36, 2002, Seiten 625-632, XP002353795
- PATENT ABSTRACTS OF JAPAN Bd. 009, Nr. 222 (C-302), 9. September 1985 (1985-09-09) & JP 60 084124 A (MITSUI KINZOKU KOGYO KK), 13. Mai 1985 (1985-05-13)

## Beschreibung

Die vorliegende Erfindung betrifft ein Filtermaterial, insbesondere ein Filtermaterial für die Trinkwasseraufbereitung.

An Trinkwasser werden hohe Anforderungen hinsichtlich Geschmack, Optik und vor allem gesundheitlicher Unbedenklichkeit gestellt. Die Ressourcen für sauberes Trinkwasser sind aber begrenzt und auch örtlich sehr ungleichmäßig verteilt. Deshalb besteht ein ständiger Bedarf alle möglichen Arten von Verunreinigungen aus Wasser zu entfernen. Ziel ist es, eine weitgehend vollständige Filterung mit so wenig Aufwand und Kosten wie möglich zu erreichen. Unter diesem Gesichtspunkt müssen Filtermaterialien und Filter entwickelt werden.

Eines der Probleme stellen Eisen, Mangan und Arsen sowohl in gesundheitlicher als auch in optischer Hinsicht dar.

Es ist bekannt, Wasser über einem Kiesbett aufzubereiten. Allerdings benötigt Kies als Filtermaterial eine verhältnismäßig lange Anlaufzeit von bis zu 12 Monaten, in der sich auf dem Kies das eigentliche Filtermaterial aus dem Wasser ablagert. Es wird angenommen, dass vor allem abgeschiedenes Mangandioxid und Eisenoxide die Filterwirkung bezüglich Mangan und Eisen bewirken.

Zur Verbesserung der Enteisenung und Entmanganung ist es weiterhin bekannt, Mangandioxid als Filtermaterial einzusetzen. Dies erfolgt einerseits durch Zumischen zu den bekannten Sand- bzw. Kiesfiltermaterialien. Aufgrund der unterschiedlichen Schüttgewichte und Korngrößenverteilung neigen diese Filtermaterialien zur Entmischung, insbesondere bei der zur Regeneration notwendigen Rückspülung. Zusätzlich ist besonders bei höheren Eisengehalten mit einem schnellen Zusetzen des Filters durch ausgefällte Oxide wie Eisenoxid zu rechnen. Hierdurch wird der Fließwiderstand, der unmittelbar die pro Zeiteinheit filterbare Wassermenge beeinflusst, immer weiter erhöht, bis hin zu einer Verstopfung des Filters.

Ein Vorschlag zur Lösung dieser Probleme sind mit Mangandioxid beschichtete Partikel als Filtermaterial. So ist unter dem Namen "Hydrolit^{®} MN" ein mit Manganoxidhydrat beschichtetes alkalisch reagierendes Rundkorn von der Firma Rheinkalk Akdolit GmbH & Co. KG, Deutschland, erhältlich, welches zur Entmanganung bestimmt ist. Weiterhin ist mit Manganoxiden beschichteter Zeolith oder Glauconit unter dem Namen ,,Greensand" für diesen Zweck im Handel. Diese Materialien haben den Nachteil, dass eine Anlaufzeit von z. B. 2 Wochen benötigt wird, bevor eine ausreichende Entmanganung und Enteisenung erreicht wird. Weiterhin ist eine verhältnismäßig häufige Rückspülung zur Regeneration erforderlich.

Aus der DE 100 09 669 A1 ist es bekannt, ein aus mindestens drei Schichten bestehendes Filtermaterial einzusetzen. Dabei wird von unten nach oben eine erste Schicht mit einem ersten Schichtmaterial, eine über der ersten Schicht angeordnete zweite Schicht mit einem zumindest auch zur Entmanganung vorgesehen zweiten Schichtmaterial und eine dritte über der zweiten Schicht angeordnete Schicht mit einem im Wesentlichen zur mechanischen Filtration vorgesehenen dritten Schichtmaterial verwendet. Als zweites Schichtmaterial wird ein Erz mit mehr als 70 Gew.% MnO₂ einer Körnung von 0,3 bis 1,0 mm und einem Schüttgewicht von etwa 2 g/l genannt. Nachteilig ist, dass solche Erze verhältnismäßig teuer sind und zudem häufig gesundheitlich bedenkliche Nebenbestandteile aufweisen. Auch ist die Handhabung eines aus drei Schichten aufgebauten Filtermaterials anfällig für Anwendungsfehler.

Es bestand daher die Aufgabe, ein Filtermaterial bereitzustellen, welches die oben genannten Nachteile vermeidet oder zumindest verringert.

Die Lösung dieser Aufgabe besteht darin, als Filtermaterial zur Trinkwasseraufbereitung ein Gemisch aus 1 bis 50 Gew.% ersten Partikeln, welche aus einem Erz mit einem Gehalt an Mangandioxid von mindestens 80 Gew.% bestehen, und 50 bis 99 Gew.% zweiten Partikeln, welche aus einem mit Manganoxid beschichteten kalkstämmigen Material bestehen, einzusetzen.

Alle Prozentangaben beziehen sich, soweit nicht anders angegeben, auf das Gewicht.

Das erfindungsgemäße Filtermaterial gewährleistet einerseits eine ausreichende Filterung von Mangan und Eisen ohne Anlaufzeit. Gleichzeitig ist im Vergleich zu Filtermaterialien aus Manganerzen der Preis erheblich geringer und auch die Belastung des gefilterten Wassers mit den typischen Nebenbestandteilen der Erze wie Arsen ist deutlich vermindert.

Vorzugsweise wird als Erz für die ersten Partikel ein Manganerz mit einem Mangandioxid (MnO₂) Gehalt von größer 85 Gew.% eingesetzt. Ein bevorzugt einsetzbares Manganerz ist beispielsweise unter dem Namen "LayneOx^{®} " von der Layne Christensen Company, Bridgewater, NJ 08807, USA, vertriebenes Produkt erhältlich, welches Eisen-, Aluminium-, Calcium- und Magnesiumoxide als Nebenbestandteile enthält und frei von nachweisbaren Arsenverunreinigungen ist. Ein weiteres bevorzugt einsetzbares Manganerz für die ersten Partikel ist unter dem Namen "Filtrasorb^{®} Catalox" von der CWG GmbH, D-68219 Mannheim erhältlich.

Der Anteil der ersten Partikel beträgt erfindungsgemäß 1 bis 50 Gew.%, insbesondere 5 bis 40 Gew.%, noch bevorzugter 10 bis 30 Gew.%. Er sollte mindestens 1 Gew.%, vorzugsweise mindestens 5 Gew.%, insbesondere etwa 10 bis 15 Gew.% betragen. Bei höheren Anteilen steigen die Kosten, ohne eine signifikante Verbesserung der Filterleistung zu bewirken. Kleinere Anteile führen dazu, dass eine Anlaufzeit benötigt wird und in manchen Fällen auch eine häufigere Regeneration erforderlich ist.

Als Material für die zweiten Partikel eignet sich im Prinzip jedes mit Manganoxid beschichtete Material. Partikel aus kalkstämmigen Material wie Kalkstein, Dolomit, Kalksandstein sowie Calciumsilikate sind jedoch aufgrund der gesundheitlichen Unbedenklichkeit sowie der preiswerten Verfügbarkeit bevorzugt. Auch mit Manganoxid beschichteter Quarzkies ist als Material für die zweiten Partikel geeignet.

Ein gut geeignetes Material für die zweiten Partikel ist mit Manganoxid (Braunstein) beschichteter Dolomit. Die Braunsteinbeschichtung liegt vorzugsweise in einer Menge von 10 bis 20 Gew.%, bezogen auf das Gesamtgewicht der zweiten Partikel, vor. Das zur Beschichtung eingesetzte Dolomit kann ferner noch Bindemittel, insbesondere silikatische Bindemittel wie Zement, enthalten. Vorzugsweise liegt das Bindemittel in einer Menge von 5 bis 15 Gew.%, bezogen auf das Gesamtgewicht der zweiten Partikel, vor.

Ein besonders geeignetes Material für die zweiten Partikel ist das oben erwähnte Hydrolit^{®} MN der Rheinkalk Akdolit GmbH & Co. KG.

Die Partikel des erfindungsgemäßen Filtermaterials haben vorzugsweise eine Korngröße im Bereich von 0,5 bis 5 mm, insbesondere von 0,7 bis 1,5 mm. In einer bevorzugten Ausführungsform sind die Partikel nahezu kugelförmig. Das Schüttgewicht sollte 1 bis 2 Tonnen/m³, bevorzugt etwa 1,5 Tonnen/m³ betragen.

Zur Herstellung der erfindungsgemäßen Filtermaterialien werden zunächst die Ausgangsmaterialien, Erz-Partikel und beschichtete Partikel, einer Trommel zugeführt, die diese homogen vermengt. Anschließend werden die Partikel mit Wasser gewaschen, getrocknet und über ein Sieb nach Größe klassiert. Zusätzlich werden die Partikel vorzugsweise noch mit CO₂ behandelt um eventuell vorhandenes CaO zur CaCO₃ umzusetzen.

Das erfindungsgemäße Filtermaterial eignet sich hervorragend zur Trink- und Gebrauchswasseraufbereitung, insbesondere zu dessen Entmanganung, Entarsenierung und Enteisenung.

Erfindungsgemäßes Filtermaterial, das zur Entmanganung eingesetzt werden soll, weist vorzugsweise einen Gehalt an ersten Partikeln von etwa 5 bis 15 Gew.%, insbesondere 8 bis 12 Gew.%, auf. Vorteilhaft ist ferner, wenn die Korngröße der ersten und/oder zweiten Partikel 0,5 bis 2 mm, insbesondere 0,7 bis 1,3 mm, beträgt.

Erfindungsgemäßes Filtermaterial, das zur Entarsenierung eingesetzt werden soll, weist vorzugsweise einen Gehalt an ersten Partikeln von etwa 10 bis 20 %, insbesondere 13 bis 17 Gew.%, auf. Vorteilhaft ist ferner, wenn die Korngröße der ersten und/oder zweiten Partikel des Filtermaterials 0,7 bis 4 mm, insbesondere 1 bis 3 mm, beträgt.

Die Erfindung soll anhand des folgenden Beispiels näher erläutert werden, ohne jedoch darauf beschränkt zu sein.

### Beispiel

In vier gleiche Filtergehäuse von 50 cm Höhe und 6 cm Durchmesser wurde jeweils eine Schüttung von Sand (Filter 1), Filtrasorb^{®} Catalox (Filter 2), Hydrolit^{®} MN (Filter 3), und dem erfindungsgemäßen Filtermaterial aus 85 Gew.% Hydrolit^{®} MN und 15 Gew.% Filtrasorb^{®} Catalox (Filter 4) eingebracht. Dann wurde Wasser mit einem Gehalt an 0,95 mg/l Mangan (berechnet als MnO₂) und einem pH von etwa 7,5 mit einer Fließgeschwindigkeit von 15 m³/h durch den Filter geleitet. Es wurde jeweils der Gehalt an Eisen und Mangan nach 0,1 h, 24 h, 48 h und 240 h gemessen. Die Ergebnisse sind in der folgenden Tabelle dargestellt.

| **Laufzeit** (h) | **Mangankonzentration** (**mg/l**) | | | | |
|---|---|---|---|---|---|
| | **Rohwasser** | **Filter 1** | **Filter 2** | **Filter 3** | **Filter 4** |
| 0,1 | 0,95 | 0,86 | 0,1 | 0,1 | 0,25 |
| 24 | 0,94 | 0,85 | 0,01 | 0,1 | 0,04 |
| 48 | 0,94 | 0,83 | 0,01 | 0,6 | 0,03 |
| 240 | 0,94 | 0,65 | <0,01 | <0,01 | <0,01 |

Man erkennt, dass die erfindungsgemäße Kombination von mangandioxidbeschichtetem Kalkstein (Hydrolit^{®} MN) und Manganerz mit einem Mangandioxidgehalt von größer 80Gew.% (Filter 4) bei geringeren Kosten etwa vergleichbare Ergebnisse liefert wie reines Mangandioxid (Filter 2).

## Patentansprüche

1. Filtermaterial, insbesondere zur Wasseraufbereitung, **dadurch gekennzeichnet, dass** es 1 bis 50 Gew.% erste Partikel, welche aus einem Erz mit einem Mangandioxidgehalt von mindestens 80 Gew.% bestehen, und 50 bis 99 Gew.% zweiten Partikel, welche aus einem mit Mangandioxid beschichteten kalkstämmigen Material bestehen, enthält, wobei die ersten und zweiten Partikel mindestens 90 Gew.% ausmachen.

2. Filtermaterial gemäß Anspruch 1, **dadurch gekennzeichnet, dass** es aus 10 bis 15 Gew.% der ersten Partikel und 90 bis 85 Gew.% der zweiten Partikel besteht.

3. Filtermaterial gemäß Anspruch 1 oder 2, **dadurch gekennzeichnet, dass** die ersten Partikel aus Manganerz mit einem Mangandioxidgehalt von mindestens 85 Gew.% bestehen.

4. Filtermaterial nach einem der vorhergehenden Ansprüche, **dadurch gekennzeichnet, dass** die zweiten Partikel aus mit Mangandioxid beschichteten kalkstämmigen Material bestehen, wobei das Magandioxid in einer Menge von 10 bis 20 Gew.%, bezogen auf das Gesamtgewicht der zweiten Partikel, vorhanden ist.

5. Filtermaterial nach einem der vorhergehenden Ansprüche, **dadurch gekennzeichnet, dass** das kalkstämmige Material der zweiten Partikel Kalkstein, Dolomit, Kalksandstein und/oder Calciumsilikat ist.

6. Filtermaterial nach einem der vorhergehenden Ansprüche, **dadurch gekennzeichnet, dass** das kalkstämmige Material Bindemittel, insbesondere Zement, enthält.

7. Filtermaterial nach Anspruch 6, **dadurch gekennzeichnet, dass** das Bindemittel in einer Menge von 5 bis 15 Gew.%, bezogen auf das Gesamtgewicht der zweiten Partikel, enthalten ist.

8. Filtermaterial gemäß Anspruch 1 oder 2, **dadurch gekennzeichnet, dass** die Partikel eine Korngröße von 0,5 bis 5 mm, vorzugsweise 0,7 bis 1,5 mm aufweisen.

9. Filtermaterial gemäß einem der Ansprüche 1 bis 3, **dadurch gekennzeichnet, dass** die Partikel ein Schüttgewicht von etwa 1,5 Tonnen/m³ aufweisen.

10. Verwendung eines Filtermaterials nach einem der Ansprüche 1 bis 9 zur Aufbereitung von Trink- und/oder Gebrauchswasser.

11. Verwendung nach Anspruch 10, **dadurch gekennzeichnet, dass** das Filtermaterial zur Entmanganung, Entarsenierung und/oder Enteisenung von Trink- und/oder Gebrauchswasser eingesetzt wird.

## Claims

1. A filter material, used particularly in the treatment of water, **characterised in that** it contains from 1 to 50 % by weight of first particles consisting of an ore with at least 80 % by weight of manganese dioxide and 50 to 99 % by weight of second particles consisting of a lime-based material coated with manganese dioxide whereby the first and second particles form at least 90 % by weight.

2. A filter material according to claim 1, **characterised in that** it consists of from 10 to 15 % by weight of the first particles and 90 to 85 % by weight of the second particles.

3. A filter material according to claim 1 or 2, **characterised in that** the first particles consist of manganese ore containing at least 85 % by weight of manganese dioxide.

4. A filter material according to one of the preceding claims, **characterised in that** the second particles consist of a lime-based material coated with manganese dioxide, whereby the amount of manganese dioxide present forms 10 to 20 % by weight in relation to the total weight of the second particles.

5. A filter material according to one of the preceding claims, **characterised in that** the lime-based material for the second particles is limestone, dolomite, chalky sandstone and/or calcium silicate.

6. A filter material according to one of the preceding claims, **characterised in that** the lime-based material contains a binding agent, particularly cement.

7. A filter material according to claim 6, **characterised in that** the binding agent forms 5 to 15 % by weight in relation to the total weight of the second particles.

8. A filter material according to claim 1 or 2, **characterised in that** the particles have a grain size of between 0.5 and 5 mm, preferably 0.7 to 1.5 mm.

9. A filter material according to claims 1 to 3, **characterised in that** the particles have a bulk density of approximately 1.5 tonnes/m³.

10. The use of a filter material according to one of the claims 1 to 9 for the treatment of drinking water and/or water for general use.

11. The use according to claim 10, **characterised in that** the filter material is used to remove manganese, arsenic and/or iron from drinking water and/or water for general use.

## Revendications

1. Matériau de filtre, en particulier pour le traitement de l'eau, **caractérisé en ce qu'**il contient 1 à 50% en poids de premières particules, qui consistent en un minerai avec une teneur en dioxyde de manganèse d'au moins 80% en poids, et 50 à 99% en poids de deuxièmes particules, qui consistent en un matériau calcaire revêtu d'oxyde de manganèse, où les premières et deuxièmes particules représentent au moins 90% en poids.

2. Matériau de filtre selon la revendication 1, **caractérisé en ce qu'**il consiste en 10 à 15% en poids des premières particules et 90 à 85% en poids des deuxièmes particules.

3. Matériau de filtre selon la revendication 1 ou 2, **caractérisé en ce que** les premières particules consistent en un minerai de manganèse avec une teneur en dioxyde de manganèse d'au moins 85% en poids.

4. Matériau de filtre selon l'une des revendications précédentes, **caractérisé en ce que** les deuxièmes particules consistent en un matériau calcaire revêtu de dioxyde de manganèse, où le dioxyde de manganèse est présent en une quantité allant de 10 à 20% en poids, sur base du poids total des deuxièmes particules.

5. Matériau de filtre selon l'une des revendications précédentes, **caractérisé en ce que** le matériau calcaire des deuxièmes particules est le calcaire, la dolomite, le grès argilo-calcaire et/ou le silicate de calcium.

6. Matériau de filtre selon l'une des revendications précédentes, **caractérisé en ce que** le matériau calcaire contient un liant, en particulier du ciment.

7. Matériau de filtre selon la revendication 6, **caractérisé en ce que** le liant est présent en une quantité allant de 5 à 15% en poids, sur base du poids total des deuxièmes particules.

8. Matériau de filtre selon la revendication 1 ou 2, **caractérisé en ce que** les particules présentent une granulométrie allant de 0,5 à 5 mm, de préférence de 0,7 à 1,5 mm.

9. Matériau de filtre selon l'une des revendications 1 à 3, **caractérisé en ce que** les particules présentent un poids en vrac d'environ 1, 5 tonne/m³.

10. Utilisation d'un matériau de filtre selon l'une des revendications 1 à 9, pour le traitement d'eau potable et/ou usée.

11. Utilisation selon la revendication 10, **caractérisée en ce que** le matériau de filtre est mis en oeuvre pour la démanganisation, la désarsénation et/ou la déferrisation d'eau potable et/ou d'eau usée.
